## Europäisches Patentamt
## European Patent Office
## Office européen des brevets

(19)

(11) Numéro de publication: **0 256 911**
**B1**

(12)

# FASCICULE DE BREVET EUROPEEN

(45) Date de publication du fascicule du brevet:
27.12.90

(51) Int. Cl.⁵: **C11B 3/02, A23L 1/015, A23C 15/12**

(21) Numéro de dépôt: **87401709.8**

(22) Date de dépôt: **22.07.87**

(54) **Procédé d'élimination du cholestérol contenu dans une matière grasse d'origine animale et matière grasse appauvrie en cholestérol obtenue.**

(30) Priorité: **24.07.86 FR 8610982**

(43) Date de publication de la demande:
**24.02.88 Bulletin 88/8**

(45) Mention de la délivrance du brevet:
**27.12.90 Bulletin 90/52**

(84) Etats contractants désignés:
**AT BE CH DE ES FR GB GR IT LI LU NL SE**

(56) Documents cités:
**US-A- 4 383 992**

**STÄRKE,
vol. 34, no. 11, novembre 1982, pages 379-385, Verlag Chemie GmbH, Weinheim, DE; J. SZEJTLI:
"Cyclodextrins in food, cosmetics and toiletries"
CHEMICAL ABSTRACTS,
vol. 96, no. 3, février 1982, page 526, résumé no. 33613n, Columbus, Ohio, US; & JP-A-81 127 058 (TAKEDA CHEMICAL INDUSTRIES, LTD) 05-10-1981**

(73) Titulaire: **MONSERBIO, 25 Faubourg des Balmettes, F-74000 Annecy(FR)**

(72) Inventeur: **Courregelongue, Jean, 3, rue George Clémenceau, F-31120 Portet Garonne(FR)**
Inventeur: **Maffrand, Jean-Pierre, 5, rue du Corps-Franc-Pommies, F-31120 Portet Garonne(FR)**

(74) Mandataire: **Bressand, Georges et al, c/o CABINET LAVOIX 2 Place d'Estienne d'Orves, F-75441 Paris Cédex 09(FR)**

**Description**

La présente invention concerne un nouveau procédé d'élimination du cholestérol à partir d'une matière grasse d'origine animale et la matière grasse ainsi traitée.

Les matières grasses animales contiennent des stérols et, en particulier, du cholestérol. J.P. WOLFF (in MANUEL D'ANALYSE des CORPS GRAS, Azoulay, Ed., Paris, 1968,p. 552) a ainsi donné la teneur en stérols, exprimée en mg pour 100 g., de diverses matières animales :

| SAINDOUX | SUIF DE BOEUF | GRAISSE DE CHEVAL | GRAISSE DE SARDINE | BEURRE |
|----------|---------------|-------------------|--------------------|--------|
| 50–120 | 75–140 | 80–120 | 275–500 | 225–350 |
| 98 p. 100 de ces stérols sont représentés par du cholestérol. | | | | |

Des études épidémiologiques (Lipid Research Clinics Progam. The Lipid Research Clinics Coronary Primary Prevention Trials. J. Amer. Med. Ass., 1984, 251, 351-374) ayant établi une corrélation positive entre les taux élevés de cholestérol plasmatique et les maladies cardio-vasculaires, il est apparu opportun de disposer d'un procédé d'élimination permettant de diminuer de façon significative la quantité de cholestérol présent dans les graisses animales, tel que le beurre, le saindoux et le suif utilisées en alimentation humaine.

De nombreux travaux ont été réalisés mais aucun d'entre eux n'a conduit à un procédé vraiment satisfaisant : la précipitation à la digitonine, l'extraction par solvant qui peut laisser dans la matière grasse des résidus toxiques ; enfin, l'absorption sur des colonnes et la microdistillation sont des procédés difficiles à mettre en oeuvre industriellement car ils impliquent un matériel lourd et des manipulations complexes et onéreuses.

La demanderesse a précisément mis au point un nouveau procédé général utilisable à l'échelle industrielle qui permet l'élimination du cholestérol contenu dans une matière grasse d'origine animale.

Ce procédé met à profit la capacité inhérente aux cyclodextrines de former des complexes d'inclusion avec certaines molécules organiques.

Les cyclodextrines sont des oligosaccharides cycliques constitués d'unités glycopyranose reliées entr'elles par une liaison osidique alpha (1 → 4). Elles présentent une cavité hydrophobe qui permet la formation de complexes d'inclusion par insertion de molécules organiques. Leur toxicité a aussi été étudiée et on a constaté que l'administration par voie orale de ces cyclodextrines n'a révélé aucun effet toxique chez le rat et chez le chien (J. SZEJTLI, Molecular entrapment and release properties of drugs by cyclodextrins, in Controlled drug bioavailability, Vol. 3, V.F. SMOLEN and L.A. BALL ed. 1985, J. WILEY, p. 365 ; W. SAENGER, Angew. Chem. Int. Ed. Engl., 1980, 19, 344).

Les cyclodextrines sont actuellement essentiellement utilisées pour complexer les pesticides. On a décrit d'autres applications et notamment leur mise en oeuvre pour extraire des acides gras libres à partir d'huiles végétales (J. SZEJTLI, Cyclodextrins : a new group of industrial basic materials, Die Nahrung, 1985, 29 (9), 911-924) mais leur utilisation pour l'extraction du cholestérol n'avait pas encore été envisagée.

Le procédé selon l'invention comprend une phase de complexation des stérols suivie d'une phase de séparation des complexes formés. La matière grasse concernée maintenue à l'état liquide est mise au contact de la cyclodextrine choisie sous atmosphère non oxydante. Lorsqu'il s'agit d'une matière grasse solide à la température ambiante, il convient par un chauffage modéré à une température comprise entre la température de fusion de la matière grasse et 80°C de la faire passer à l'état liquide. De préférence, le contact est réalisé à une température voisine de 40°C ; ce contact est également facilité par une agitation avantageusement entretenue tout au long de cette phase de complexation dont la durée peut atteindre plusieurs heures. De préférence, la bétacyclodextrine, constituée de sept unités glucopyranose, est utilisée. D'autres cyclodextrines telles que la 2,6-di-O-méthyl β cyclodextrine, la 2,3,6 tri-O-méthyl β cyclodextrine, 1α-cyclodextrine dont les dimensions permettent de même la formation de complexes d'inclusion, peuvent être mises en oeuvre. Les quantités de cyclodextrine utilisées peuvent varier de 1 % à 10 % en poids par rapport aux quantités de matière grasse mises en jeu. Les complexes, formés au cours de cette première phase entre les molécules de cholestérol et les molécules de cyclodextrines, sont ensuite éliminés par entrainement dans la phase aqueuse et séparation de ladite phase. L'agitation du milieu réactionnel favorise la solubilisation des complexes dans l'eau. Un procédé physique tel qu'une décantation permet alors la séparation de la phase lipidique et de la phase aqueuse.

La phase lipidique recueillie peut être avantageusement soumise à une étape de lavage pouvant comporter plusieurs lavages successifs à l'eau pour éliminer une quantité accrue de complexes.

Afin de réaliser une extraction plus complète du cholestérol, on peut de plus effectuer plusieurs opérations successives d'extraction, éventuellement suivies à chaque fois d'une étape de lavage de la phase lipidique.

L'application en continu de ce procédé permet en définitive d'éliminer jusqu'à 80 % des stérols contenus dans une matière grasse animale, le pourcentage de cholestérol éliminé étant notamment fonction de la teneur en cholestérol de la matière grasse concernée.

Ce procédé convient à l'élimination du cholestérol à partir de matières grasses animales utilisées en alimentation humaine, et plus particulièrement à l'extraction du cholestérol à partir des matières grasses laitières et notamment du beurre déshydraté ou non ainsi qu'à partir du suif et du saindoux.

L'invention concerne également, selon un second aspect, les matières grasses appauvries en stérols que permet d'obtenir le procédé mis en oeuvre.

Des exemples de réalisation de l'invention sont décrits, ci-dessous, à titre non limitatif.

## EXEMPLE 1

10 g de beurre déshydraté (ci-après désigné par les initiales MGLA correspondant à l'expression "matière grasse laitière anhydre") sont chauffés à 40°C sous azote, en présence de 0,5 g de béta-cyclodextrine ALDRICH. Après trois heures de chauffage à 40°C, 100 ml d'eau déminéralisée sont versés et le milieu réactionnel est maintenu, sous agitation, à 40°C pendant trois heures.

La phase aqueuse et la phase lipidique (ou matière grasse finale) obtenues après décantation sont recueillies séparément. La phase lipidique recueillie après décantation est lavée 3 fois avec 3 x 100 ml d'eau déminéralisée. Cet exemple a été répété.

Les résultats sont portés sur le tableau suivant (col.2) où l'abréviation βCD désigne la béta-cyclodex-trine. Le premier essai a permis l'élimination de 26% du cholestérol contenu dans la MGLA. Le taux du cholestérol éliminé a été contrôlé comme suit : dosage du cholestérol contenu dans la matière grasse de départ, dans la matière grasse finale et dans la phase aqueuse par chromatographie en phase gazeuse sur colonne capillaire avec du stigmastérol pour étalon interne.

## EXEMPLE 2

On procède comme indiqué à l'exemple n° 1 en utilisant 1 g de béta-cyclodextrine.

Les résultats sont portés sur le tableau n° 1 à la colonne 1. Cet essai a permis l'élimination de 33% du cholestérol initial.

## EXEMPLE 3

Le beurre déshydraté, après un premier traitement analogue à celui de l'exemple n° 1, est additionné d'une nouvelle quantité (0,45 g) de béta-cyclodextrine et remis à chauffer à 40°C pendant trois heures. Après extraction aqueuse et trois lavages à l'eau de la phase lipidique, l'opération est répétée une deuxième fois avec 0,40 g de béta-cyclodextrine. Les résultats sont portés sur le tableau n° 1 aux colon-nes 3 et 4. Cet essai a permis l'élimination avec trois extractions successives de 41% du cholestérol contenu dans la MGLA.

## EXEMPLE 4

10 g de saindoux sont chauffés à 50°C sous azote en présence de 0,5 g de bétacyclodextrine.

Après trois heures de chauffage à 50°C, 100 ml d'eau déminéralisée sont ajoutés et le mélange réactionnel est maintenu sous agitation à 50 °C. pendant trois heures.

Après décantation de la phase aqueuse, la phase grasse est lavée à l'eau. L'analyse de la teneur résiduelle en cholestérol dans la phase grasse indique que 17% du cholestérol ont été éliminés en une seule opération.

## EXEMPLE 5

Un traitement analogue à celui des exemples 1 et 4 réalisé sur du suif, permet d'éliminer 18% de cholestérol de la matière grasse en une seule opération.

| | | Témoin | colonne 1 $\dfrac{\beta CD}{MG} = 0,1$ | colonne 2 $\dfrac{\beta CD}{MG} = 0,05$ | colonne 3 $\dfrac{\beta CD}{MG - 2\text{ème.Ext.}} = 0,05$ | colonne 4 $\dfrac{\beta CD}{MG - 3\text{ème.Ext.}} = 0,05$ |
|---|---|---|---|---|---|---|
| MGLA | % cholestérol | 0,27 | 0,18 | 0,20 | 0,175 | 0,16 |
| | % cholestérol éliminé | 0 | − 33 | − 26 | − 35 | − 41 |
| SUIF | % cholestérol | 0,12 | | 0,10 | | |
| | % cholestérol éliminé | 0 | | − 17 | | |
| SAINDOUX | % cholestérol | 0,11 | | 0,09 | | |
| | % cholestérol éliminé | 0 | | − 18 | | |

## Revendications

1. Procédé d'élimination du cholestérol contenu dans une matière grasse d'origine animale caractérisé en ce que la matière grasse fluidifiée est mise en contact avec une cyclodextrine sous atmosphère non oxydante, que ce contact est prolongé sous agitation pendant 30 minutes à 10 heures à une température comprise entre la température de fusion de la matière grasse et 80°C, de façon à permettre la formation de complexes entre le cholestérol et la cyclodextrine puis que lesdits complexes sont séparés par entraînement dans l'eau et séparation de la phase aqueuse.

2. Procédé selon la revendication 1, caractérisé en ce que l'on procède à une étape de lavage à l'eau de la phase lipidique recueillie après séparation de la phase aqueuse.

3. Procédé selon la revendication 2, caractérisé en ce que ladite phase lipidique est soumise à au moins un deuxième cycle d'extraction à l'aide d'une cyclodextrine.

4. Procédé selon l'une quelconque des revendications 1 à 3, caractérisé en ce que la matière grasse est de la matière grasse anhydre.

5. Procédé selon l'une quelconque des revendications 1 à 4, caractérisé en ce que la matière grasse est le suif.

6. Procédé selon l'une quelconque des revendications 1 à 4, caractérisé en ce que la matière grasse est le saindoux.

7. Procédé selon l'une quelconque des revendications 1 à 6, caractérisé en ce que la cyclodextrine utilisée est la béta-cyclodextrine.

8. Procédé selon la revendication 7, caractérisé en ce que la béta-cyclodextrine est ajoutée en quantité telle qu'elle représente de 1 à 20% en poids de la matière grasse.

9. Procédé selon les revendications 7 et 8, caractérisé en ce que la béta-cyclodextrine est ajoutée en quantité telle qu'elle représente de 5 à 10% en poids de la matière grasse.

## Patentansprüche

1. Verfahren zur Abtrennung von in Fettsubstanzen tierischen Ursprungs enthaltenem Cholesterin, dadurch gekennzeichnet, daß die verflüssigte Fettsubstanz in einer nichtoxidierenden Atmosphäre mit einem Cyclodextrin in Kontakt gebracht wird, der Kontakt unter Rühren 30 min bis 10 h bei einer Temperatur zwischen der Schmelztemperatur der Fettsubstanz und 80°C aufrechterhalten wird, um so die Bildung von Komplexen zwischen dem Cholesterin und dem Cyclodextrin zu ermöglichen, und die gebildeten Komplexe durch Extraktion mit Wasser und Abtrennung der wäßrigen Phase abgetrennt werden.

2. Verfahren nach Anspruch 1, dadurch gekennzeichnet, daß die gewonnene Lipidphase nach Abtrennung von der wäßrigen Phase einer Waschstufe mit Wasser unterzogen wird.

3. Verfahren nach Anspruch 2, dadurch gekennzeichnet, daß die Lipidphase zumindest einem zweiten Extraktionszyklus mit einem Cyclodextrin unterzogen wird.

4. Verfahren nach einem der Ansprüche 1 bis 3, dadurch gekennzeichnet, daß die Fettsubstanz eine wasserfreie Fettsubstanz ist.

5. Verfahren nach einem der Ansprüche 1 bis 4, dadurch gekennzeichnet, daß die Fettsubstanz Talg ist.

6. Verfahren nach einem der Ansprüche 1 bis 4, dadurch gekennzeichnet, daß die Fettsubstanz Schweineschmalz ist.

7. Verfahren nach einem der Ansprüche 1 bis 6, dadurch gekennzeichnet, daß das verwendete Cyclodextrin $\beta$-Cyclodextrin ist.

8. Verfahren nach Anspruch 7, dadurch gekennzeichnet, daß das $\beta$-Cyclodextrin in einer Menge zugesetzt wird, die 1 bis 20 Gew.-% der Fettsubstanz entspricht.

9. Verfahren nach den Ansprüchen 7 und 8, dadurch gekennzeichnet, daß das $\beta$-Cyclodextrin in einer Menge zugesetzt wird, die 5 bis 10 Gew.-% der Fettsubstanz entspricht.

## Claims

1. Process for eliminating cholesterol contained in a fatty substance of animal origin characterized in that the liquefied fatty substance is brought into contact with a cyclodextrin under a non-oxidizing atmosphere, in that this contact is continued whilst stirring for 30 minutes to 10 hours at a temperature between the fusion temperature of the fatty substance and 80°C, so as to allow the formation of complexes between the cholesterol and the cyclodextrin, then in that the said complexes are separated by entrainment in water and separation of the aqueous phase.

2. Process according to claim 1, characterized in that there is a stage of washing with water of the lipid phase collected after separation of the aqueous phase.

3. Process according to claim 2, characterized in that the said lipid phase is subjected to at least a second cycle of extraction using a cyclodextrin.

4. Process according to any one of claims 1 to 3, characterized in that the fatty substance is an anyhydrous fatty substance.

5. Process according to any one of the claims 1 to 4, characterized in that the fatty substance is suet.

6. Process according to any one of claims 1 to 4, characterized in that the fatty substance is lard.

7. Process according to any one of claims 1 to 6, characterized in that the cyclodextrin used is beta-cyclodextrin.

8. Process according to claim 7, characterized in that beta-cyclodextrin is added in such a quantity that it represents 1 to 20% by weight of the fatty substance.

9. Process according to claims 7 and 8, characterized in that beta-cyclodextrin is added in such a quantity that it represents 5 to 10% by weight of the fatty substance.